Europäisches Patentamt

European Patent Office

Office européen des brevets

(19)

(11) Publication number: **0 356 242**
**A2**

(12) # EUROPEAN PATENT APPLICATION

(21) Application number: **89308610.8**

(22) Date of filing: **24.08.89**

(51) Int. Cl.⁵: **C 08 F 2/00**
C 08 F 291/08, C 08 F 251/00

(30) Priority: **26.08.88 GB 8820281**

(43) Date of publication of application:
**28.02.90 Bulletin 90/09**

(84) Designated Contracting States:
**BE DE ES FR GB IT NL SE**

(71) Applicant: **ALLIED COLLOIDS LIMITED**
**P.O. Box 38 Low Moor**
**Bradford West Yorkshire, BD12 0JZ (GB)**

(72) Inventor: **Zhang, Lian-Sheng**
**24 Xuefu Road Nangang District**
**Harbin (CN)**

**Wang, Yu-Qin**
**24 Xuefu Road Nangang District**
**Harbin (CN)**

**Farrar, David**
**190 Westfield Lane Idle**
**Bradford West Yorkshire BD10 8UB (GB)**

(74) Representative: **Lawrence, Peter Robin Broughton et al**
**GILL JENNINGS & EVERY 53-64 Chancery Lane**
**London WC2A 1HN (GB)**

(54) Polymerisation processes and products.

(57) Graft copolymers and other polymers are made by providing a foamed aqueous solution of water soluble monomeric material, initiating polymerisation by adding initiator, exothermically polymerising the monomeric material to form a foamed gel, and comminuting the gel. Preferably the polymerisation temperature is held below 60°C for at least the first 10 minutes of the polymerisation and then rises exothermically to a higher temperature. Novel graft copolymers that can be made by this technique and that are of particular value as fluid loss additives are formed from a polyhydroxy polymer, a sulphonate monomer, acrylamide and acrylic acid.

EP 0 356 242 A2

## Description

### Polymerisation Processes and Products

Polymers derived from water soluble ethylenically unsaturated monomer (which may be an individual monomer or a blend of monomers) are normally made by polymerisation of the monomer in aqueous solution at a concentration of below 50% by weight. The polymerisation may be conducted as an aqueous bulk gel polymerisation or as a reverse phase polymerisation.

Polymerisation in solutions having a higher monomer concentration is known. This can have the advantage that subsquent drying of the gel is unnecessary but it has the disadvantage that control of the polymerisation is difficult, for instance due to the necessity to avoid overheating of the polymerisation mixture due to the exothermic conditions that prevail during the polymerisation.

In conventional gel polymerisations, it is usually necessary to ensure that the conditions do not result in bubble formation within the polymerising mass. However in CN 85109462 a process is described in which acrylamide or acrylamide and acrylic acid is graft polymerised on to a water soluble polyhydroxy polymer in an aqueous polymerisation medium that has a monomer concentration of at least 60% and that is in the form of a foam during the polymerisation as a result of the generation of carbon dioxide within the aqueous medium by reaction between acid and sodium carbonate. In the main example it is stated that exothermic polymerisation starts within five minutes of adding potassium persulphate initiator and continues for 15 minutes. The description emphasises the desirable advantages of auto-acceleration of the polymerisation occurring early in the polymerisation, so as to create the Norrish-Trommstorf effect early in the polymerisation. This need to polymerise rapidly does result in the process being difficult to control so as to give products of predictable properties. The products are, necessarily, graft copolymers.

It is known that some graft copolymers can be useful downhole, e.g., as fluid loss polymers. For instance U.S. 4,703,801 describes graft copolymers of 2-acrylamido-2-methyl propane sulphonic acid (AMPS, U.S. trademark) optionally with other monomers, grafted on to lignin or cellulose derivative). However the products that are more successful commercially are medium molecular weight copolymers of sodium acrylate and acrylamide (which tends to be optimum in fresh water) and high molecular weight carboxy methyl cellulose (which tends to be optimum in saline water).

The present invention relates to novel improved ways of making polymers, especially graft polymers, and to novel graft polymers that are of particular value downhole.

According to a first aspect of the invention, a powdered polymer of a water soluble, exothermically polymerisable, ethylenically unsaturated, monomeric material is made by a process comprising providing a foamed aqueous solution of the monomeric material, initiating polymerisation of the monomeric material by blending initiator with the solution, exothermically polymerising the monomeric material to form a foamed gel and comminuting the gel, and in this process the polymerisation temperature is held below 60°C for at least the first 10 minutes of the polymerisation and is then allowed to rise exothermically to a higher temperature.

The process differs from conventional gel polymerisation processes by the requirement that the polymerising solution should deliberately be foamed before polymerisation starts. This is in contrast with the normal requirement to de-gas the solution and to conduct the polymerisation under conditions so as to avoid bubble formation. The process differs from the process in CN 85109462 by, inter alia, deliberately holding the polymerisation temperature at a relatively low temperature for at least 10 minutes after the initiator is first added, i.e., after polymerisation starts.

Thus whereas CN 85109462 emphasised the advantages of fast polymerisation, we surprisingly find that it is desirable for the polymerisation to be held at a relatively slow rate for a substantial period, at least 10 minutes from adding initiator to the solution, at the start of polymerisation and is only subsequently allowed to accelerate due to a rapid increase in temperature. The duration of the low temperature, slow polymerisation, stage can be controlled and will influence the final properties of the polymer. For instance it can easily be controlled to a duration of 10 to 60 minutes, often 10 to 40 minutes. Often the duration is at least 15 minutes but it is generally unnecessary for it to be longer than about 30 minutes.

At the end of the chosen initiation period, the temperature rapidly rises to a higher temperature that is usually above 70°C, often above 90°C and preferably sufficiently higher (e.g., 100°C) that steam is evolved.

One way of regulating this duration is by appropriate selection of the monomeric material. When this material includes for instance acrylamide and/or acrylic acid the presence of sulphonate monomers and/or allyl monomers is a useful way of extending the initial period, and preferably such monomers are present in an amount of from 3 to 30%, often 3 to 10%, by weight of the total monomeric material.

Another way of controlling the duration of the initial polymerisation is by direct or indirect heat exchange. For instance the mixture that is being polymerised may be spread as a relatively thin film or in some other way exposed to ambient coolant or a material may be included in the polymerisation mixture that is a heat storage material. This heat storage material absorbs the exothermic heat of polymerisation that is generated initially, so as to keep the temperature of the polymerising mixture substantially constant. Preferably the heat storage material is an inorganic hydrate, for instance as described in EP 0123486. Thus by adding sodium sulphate decahydrate the polymerisation mixture can be held at a temperature of around 40°C until all the decahydrate has been converted to the substantially anhydrous form of sodium sulphate, whereupon there will be rapid increase in the temperature of the polymerisation mixture.

It is desirable to include chain transfer agent in the aqueous solution either to reduce molecular weight or, in particular, to minimise chain branching or cross linking to an extent that would cause insolubilisation.

Conventional chain transfer agents may be used, e.g., propylene glycol. The amount added is usually at least 0.01% and preferably at least 0.02%, generally being no more than 15%, normally below 10%, based on the total weight of the monomers. This results in a lowering of the molecular weight of the copolymers produced. When the purpose is to minimise chain branching, other materials may be preferred. The chain transfer agent may be added deliberately to the polymerisation mixture or it may be formed during the polymerisation. Suitable materials are well known. An example is nitrilo-tris-propionamide, which can be formed in the mixture if that mixture is acidic and includes acrylamide.

Although it is usually preferred for the polymers of the invention to be linear and highly water soluble, water swellable polymers are obtained if a polyethylenically unsaturated monomer, for instance methylene bis acrylamide or other conventional ethylenic cross linking agent, is included in the monomer in an appropriate amount, generally in the range 10 to 5,000ppm, usually 100 to l,000ppm. Alternatively the polymer can be insolubilised by the inclusion of a polyvalent metal salt, such as a caesium or aluminium salt, in the polymerisation mixture.

The ethylenically unsaturated monomeric material may be a single water soluble monomer or it may be a water soluble blend of monomers. These may be selected from anionic, non-ionic and cationic monomers and it is often preferred to use a blend of non-ionic and anionic monomers or a blend of non-ionic and cationic monomers.

When a blend of non-ionic and anionic or cationic monomers is used, the amount of non-ionic monomer is generally in the range 25 to 85% by weight of the blend, with the balance being the anionic or cationic monomer or monomers.

The preferred non-ionic monomer is acrylamide but others may be used, for instance methacrylamide, vinyl pyrollidone and hydroxyalkyl (meth) acrylates.

Suitable cationic monomers are diallyldimethyl aluminium chloride, and dialkylaminoalkyl (meth) acrylates and dialkylaminoalkyl (meth) acrylamides, generally as their acid addition or quaternary ammonium salts.

Suitable anionic monomers are carboxylic monomers such as crotonic acid, itaconic acid, maleic acid or, preferably, (meth) acrylic acid. Other suitable anionic monomers are ethylenically unsaturated sulphonic monomers such as AMPS, allyl sulphonate and vinyl sulphonate. Anionic monomers are generally in the form of sodium or other water soluble salts.

In general it is preferred for the monomers to be selected from ethylenically unsaturated carboxylic monomers, ethylenically unsaturated sulphonic monomers and acrylamide, the amount of ethylenically unsaturated sulphonic monomer generally being 3 to 30% by weight of total monomeric material. It is particularly preferred for the monomeric material to be a mixture of 3 to 30% sulphonic monomer together with acrylic acid or other ethylenically unsaturated carboxylic monomer and acrylamide in an amount of 1 to 3 times the weight of carboxylic monomer.

It may be necessary to include a viscosifier in the initial foamed aqueous solution in order to impart adequate stability to the initial foam, and if such a viscosifier is used then, unless grafting is required, it should be one that is inert during the polymerisation.

Although the process can be operated to produce conventional addition polymers of monomers such as those described above, it is of particular value for the production of graft copolymers and these are obtained by including a water soluble polyhydroxy material in the aqueous solution of monomeric material. The polymerisable mixture is preferably formed from 3 to 70% water soluble polyhydroxy polymer, 3 to 10% ethylenically unsaturated sulphonate monomer and 25 to 95% of a blend of acrylamide with sodium acrylate or other water soluble salt of acrylic acid and in which, in the blend, the amount of acrylamide is 50 to 75% and the amount of sodium acrylate is 25 to 50%. All percentages are by weight unless otherwise specified.

The amount of polyhydroxy polymer is preferably 30 to 60% and the amount of the monomer blend is preferably 30 to 70%. The sulphonate monomer can be, for instance, allyl sulphonate but is preferably AMPS.

The polyhydroxy polymer can be, for instance, polyvinyl alcohol but is preferably a polysaccharide. The polysaccharide is preferably derived from starch, cellulose or derivatives and most preferably is water soluble starch, dextrin, dextran or carboxy methyl cellulose (usually as the sodium salt).

Other water soluble polymers that can be used as the backbone polymer, in place of the polyhydroxy polymers, include lignin, polyethylene oxide, and polypropylene oxide, and polyamino polymers such as polyethylene imine, but they are usually less satisfactory.

The intrinsic viscosity of the graft polymer is preferably above 5 and most preferably above 7. It is usually below 15 and is often below 12. All intrinsic viscosity/measurements in this specification are determined using dilution metering with a ub viscometer in IN $NaNO_3$ at 30°C.

When carrying out the process of the invention, it is desirable that the foamed mixture should contain a very large void space and the final foamed volume is generally at least 1.25 times and preferably at least 1.5 times, e.g., 2 times, the volume of the unfoamed mixture. As mentioned, the aqueous mixture is preferably relatively viscous before foaming so as to promote the maintenance of a sufficient degree of expansion. Viscosity can be achieved by reliance on any polyhydroxy polymer that is to be grafted or by reliance on an inert polymer or foaming can be delayed until after polymerisation has proceeded sufficiently to give the desired viscosity.

The foamed mixture should preferably be substantially free of oxygen, so as to avoid inhibition of the polymerisation by dissolved or gaseous oxygen. The monomeric solution can therefore be de-oxygenated either before or during foaming.

The foam can be created by bubbling an inert gas, such as carbon dioxide or nitrogen, through the aqueous polymerisation mixture, and foaming can be improved by including a small amount of a foaming surfactant in the mixture. Generally however foaming is caused by generating gas within the mixture. For instance when the monomer is non-ionic or anionic or a blend thereof the mixture preferably includes an inorganic carbonate, such as sodium carbonate, and acid is incorporated in the mixture in a sufficient amount to liberate sufficient carbon dioxide from the carbonate. Other carbonates can be used. For instance polyvalent metal carbonates, e.g., caesium carbonate, can give cross linked swellable polymers.

One advantage of the foamed polymerisation method is that the polymerisation mixture, on a microscale, is in intimate contact with gas bubbles. The heat of the polymerisation exotherm can therefore easily be transferred into the bubbles, so as to minimise the risk of overheating on a microscale. This transfer is promoted by the evaporation of water from the aqueous mixture into the bubbles, thereby absorbing the polymerisation exotherm as latent heat.

It is generally preferred for the concentration of monomer in the aqueous mixture to be relatively high, for instance above 60% and often 70 to 90%, by weight of monomer plus water, since the gas bubbles will result in the isolation of the polymerisation mixture into what can be considered to be very small particles, thus permitting the Norrish-Trommstorf effect to occur during the polymerisation. Also it is preferred to allow the exotherm to raise the polymerisation temperature sufficiently for water to be driven off as steam. Thus substantially all the water is generally evaporated from the mixture during the polymerisation with the result that it is unnecessary to dry the final gel.

However the concentration of the monomer in the foamed aqueous polymerisation mixture can be lower, generally in the range 20 to 50% by weight. Even though the concentration is therefore typical of those prevailing during normal bulk gel polymerisations the process has two distinct advantages. First, a substantial amount of the water is evaporated into the bubbles of the foam and out of the foamed mixture during the polymerisation, so that the comminutable mass has a lower water content than would be obtained in conventional bulk gel polymerisation. Second, since the comminutable mass is a foam, it is much easier to comminute than the normal bulk gel. These advantages render the process particularly advantageous for the production of relatively low molecular weight gel polymers and other polymers that have a gel structure that, in bulk, tends to be stickier than is convenient for normal comminution methods.

The mass that is obtained by the polymerisation can be comminuted in conventional manner and, during or after the comminution, may be dried, for instance by fluid bed drying.

To facilitate comminution it can be desirable to include a low HLB surfactant in the aqueous polymerisation mixture, generally in an amount of about 0.01 to about 0.05% by weight of the mixture. Suitable surfactants include sorbitan monostearate.

The polymerisation mixture is formed by blending the monomer (which can be any of the non-ionic, anionic or cationic monomers discussed above, or mixtures thereof) with the chosen amount of water and chemical foaming agent (unless gas is to be bubbled into the mixture) and conventional initiator. The initiator may be thermal but is preferably a redox system. When the polymerisation is a graft polymerisation on to, for instance, a polysaccharide, the polysaccharide will serve as the reductant and so it is only necessary to include, for instance, potassium persulphate or other peroxy or other thermal initiator. Unless the initiator is a polyvalent metal, such as ceric, a chelating agent such as EDTA is preferably included in the polymerisation mixture.

According to a second aspect of the invention, the foamed polymerisation process is conducted broadly as described above, preferably to make the described graft copolymers, but the initiation period is optionally less than 10 minutes and the polymerisation is conducted in the presence of a chain transfer agent, as described above.

According to a third aspect of the invention, the foamed polymerisation process is conducted broadly as described above but the initiation period can be less than 10 minutes and the polymerisation is conducted in the presence of a sulphonate monomer, preferably AMPS, preferably in the amounts specified above.

According to a fourth aspect of the invention the foamed polymerisation process is conducted broadly as described above but the initiation period can be less than 10 minutes and the polymerisation is conducted in the absence of any polyhydroxy compound and thus the process does not result in the production of a graft polymer.

According to a fifth aspect of the invention, the foamed polymerisation process is conducted broadly as described above but the initiation period can be less than 10 minutes and the concentration of monomeric material in the aqueous solution is below 50% by weight.

According to a sixth aspect of the invention, a powder, water soluble, graft copolymer is formed from 3 to 70% water soluble polyhydroxy polymer, 3 to 10% ethylenically unsaturated sulphonate monomer and 25 to 95% of a blend of acrylamide with sodium acrylate or other water soluble salt of acrylic acid and in which, in the blend, the amount of acrylamide is 50 to 75% and the amount of sodium acrylate is 25 to 50% by weight. The preferred amounts of the polyhydroxy polymer and the monomers, the preferred polyhydroxy polymers and the preferred viscosity for the final product are all as described above.

The powdered water soluble graft copolymer of the invention comprise a backbone polymer as described above (preferably a polysaccharide) on to which have been grafted one or more ethylenically unsaturated monomer and have very good solubility in water and generally have a molecular weight in the range given above.

The polymers described are of particular value as fluid loss additives and as other additives for drilling muds, completion fluids and other downhole fluids and so the invention includes, as a second aspect, such fluids, and downhole methods, using such polymers. Suitable amounts of the polymers are in the range 5 to 60, generally 10 to 30, parts per barrel.

The polymers of the invention give results, such as gel strength, plastic viscosity and yield strength, in fresh water fluids that are generally as good as or better than those using commercially available fluids loss additives and so they are very suitable in such fluids. However the polymers are of particular advantage when the aqueous medium of the fluid is a saline medium dissolved electrolyte, since the properties obtainable tend to be better than those obtainable using conventional fluid loss additives.

The polymers described above can be made by any graft polymerisation technique capable of producing polymers having the specified properties, for instance bulk gel, reverse phase emulsion, or reverse phase bead polymerisation processes. However, the polymers described above are preferably made by polymerising water soluble, ethylenically unsaturated, monomer in a foamed aqueous polymerisation mixture to form a foamed comminutable mass and then comminuting the mass, preferably as described above, especially as in the first aspect of the invention.

It has surprisingly been found that this particular technique does give polymers having high molecular weight, a high degree of linearity in the grafts, high solubility in water and very low insolubility. It is believed that these advantages follow from improving the process of CN 85109462 by controlling the temperature in the polymerisation mixture in a manner that is not possible in the method as described in that.

The following are examples.

## Example 1

100ml of distilled water are placed in a 500ml wide-mouth reaction vessel equipped with blender and/or thermometer and heated to about 80°C. 20g CMC (carboxymethyl cellulose sodium salt sold by Lamberti cmc s.p.a. trade name CARBOCEL LB-P) are added during blending and blending is continued until the CMC has dissolved. 19.5g anhydrous sodium carbonate are added and then the mixture is allowed to cool to ambient temperature to produce a high concentration solution (I).

To (I), 56.0g of powdered acrylamide (polymerisation grade, with water content less than 3%), 5ml of 5.6% aqueous solution of EDTA (disodium salt of ethylene diamine tetra-acetic acid), about 0.2ml of propylene glycol and 13.4g of powdered AMPS (2-acrylamido-2-methyl- 1-propane sulphonic acid) are added and blended for 15 minutes until a gelated solution (II) has been prepared.

To (II), 26.3g of acrylic acid (polymerisation grade, purity more than 90%) are added with high speed blending. Carbon dioxide bubbles form, filling the system and blending is continued for an additional 10 to 15 minutes.

The mixture is poured into a 500ml wide-mouth vessel or a 0.5kg plastic packet and placed in a constant temperature bath at 40°C and gelated solution (III) is obtained.

5ml of 0.1M solution of potassium persulphate in 1.0M nitric acid are added to (III), with shaking. Carbon dioxide bubbles form, and after 5 minutes isolated, gelated drops of polymeric backbone are observable. After approximately 20 minutes, high temperatures are reached as the heat of polymerisation is released. This polymerisation lasts for about 3 minutes and a large amount of water is lost as steam.

The polymerisation product obtained is a porous, unsticky solid with slight elasticity and a water content below 20%. After shredding, the product is dried at 60°C and converted to powder with an intrinsic viscosity of 9.3 in 1M $NaNO_3$ at 30°C and good solubility.

## Example 2

A polymerisation was carried out as for Example 1 except that concentrated solution (I) was prepared by adding 20ml oil phase comprising approximately 85.9% ISOPAR-M, 7.5% Span-80, 2.5% Tergitol-4.5 and 4.1% Tergitol-12.2 to the cooled mixture.

The resultant product is an easily ground, porous unsticky solid containing water less than 15%, which had an intrinsic viscosity of 10.8 in 1N $NaNO_3$ at 30°C and good solubility.

## Example 3

20g CMC (as above), 16g anhydrous sodium carbonate and 30ml of distilled water are blended together in a 500ml reaction vessel. 72ml of 51.9% aqueous solution of acrylamide was added and blended until the CMC dissolved. The mixture was allowed to cool to room temperature to give a high concentration solution (I). 3ml of 5.6% aqueous solution of EDTA (as above), 0.1ml of propylene glycol and 4g powdered AMPS and 3.5g of diacetone acrylamide were added and blended for 15 minutes to give a gelated solution (II). To (II), 25.3g of acrylic acid was blended at high speed. Carbon dioxide evolved and blending continued for a further 10 to 15 minutes. After being held at constant temperature of 40°C, gelated solution (III) was obtained. To (III), 2ml of 0.1M potassium persulphate in 1.0M nitric acid was added with shaking. Polymerisation and separation of the product proceeded as in example 1 and the white powder product had an intrinsic viscosity of 7.2 in 1M $NaNO_3$ at 30°C.

## Example 4

A polymerisation was carried out as for example 3 except that 11.2g potassium hydroxide and 25g sodium carbonate anhydrous are used in place of 16g anhydrous sodium carbonate in the preparation of (I) and 10g acrylic acid (purity more than 90%, polymerisation grade) are used in place of AMPS in the preparation of (II).

The resultant product is a water-soluble copolymer which can be used for soil improvement.

The effect of the powder product on the Apparent Viscosity, Yield Point and Plastic Viscosity of a 20ppb Gel mud system is shown in Figures 1, 2 and 3, respectively. Figures 4 and 5 show the Fluid Loss versus Product Concentration using a 20ppb Gel mud system and the API PAC Hivis mud system.

20ppb Gel mud sysem: Typical simple freshwater mud system in which several hundreds of Tonnes of fluid loss additives such as Ancomer 507 are used downhole annually.

API PAC Hivis system: Proposed industry standard test system to predice performance or PAC fluid loss additives (Flas) downhole in saline drilling muds.

## Example 5

A process broadly as described in Example 1 was repeated but propenyl sulphonic acid was used in place of AMPS to produce II, and after the polymerisation, further blending for approximately 15 minutes was carried out with Span-60 to produce a powder product.

The resultant product is a porous unsticky powder containing less than 15% water and having slight elasticity and good solubility with an intrinsic viscosity of 8.5 in 1M $NaNO_3$ at 30°C.

## Example 6

A process as for Example 5 was carried out, except that anhydrous caesium carbonate was used in place of sodium carbonate, and acrylic acid was used in place of propenyl sulphonic acid.

The polymer product is a water-swollen copolymer with expansion co-efficient of about 50, that is, 1.0g of fine powdered product with the particle size of 100 mesh can absorb about 50g of water.

## Example 7

To a 500ml wide-mouth reaction vessel equipped with blender and thermometer, 100ml of distilled water are added and heated to about 80°C. Blending is started and 120g soluble starch are added and blending is continued until the starch has dissolved and then 15ml of 5.6% aqueous solution of ethylenediaminetetra-acetic acid disodium salt and about 20ml of propane-1,2-diol are added. The mixture is then allowed to cool to room temperature and a high concentration solution (I) obtained.

To (I), 71g acrylamide and 100g anhydrous sodium carbonate are added and blended for 15 minutes until a gelated solution (II) has been prepared.

To (II) are added slowly 44g acrylic acid (purity more than 98%) while blending at high speed. Carbon dioxide bubbles are formed and fill the system. Blending is continued for 3-5 minutes, a further 44g acrylic acid are added, then 25g AMPS (2-acrylamido-2-methyl-1-propanesulfonic acid) are added and followed by a third 44g acrylic acid. The blending is continued for additional 10-15 minutes, the temperature is held at about 30°C and gelated solution (III) obtained.

To (III), 5ml of 0.1 molar solution of potassium persulphate in 1.0 molar nitric acid are added with shaking. After about 35 minutes, the system heats up automatically due to the heat of polymerisation. The polymerisation could last for about 3 minutes. Copious quantity of vapour escape during this time. When the polymerisation is complete, about 15g Span-60 pellets are added to the system to make the product change into powder.

The product is a porous unsticky solid containing less than 10% water. The product is dried at 60°C and has excellent solubility in water. The intrinsic viscosity is 4.3 in 1N $NaNO_3$ at 30°C.

The 30 minute fluid loss value are recorded for this product, and for the starch, when incorporated in 20ppb conventional freshwater mud system. The values at dosages of 0.1, 0.25 and 0.5ppb are 9.9, 8.8 and 8.1m/s respectively for the product of this example compared to 11.6, 11 and 10.9 for the starch. This demonstrates the advantage of the invention.

## Example 8

All procedures are identical to those of Example 1 except that 135ml 52% acrylamide aqueous solution are used in place of 71g powdered acrylamide in the preparation of (I) and 60g acrylonitrile (purity more than 98% polymerisation grade) are used in place of AMPS in the preparation of (II).

The result is a water-swollen copolymer with an expansion coefficient of about 50. 1.0g of the fine powdered product having a particle size of 100 mesh can absorb about 300g of water.

In place of sodium carbonate in the examples it can be desirable to use potassium carbonate. In plae of starch, it can be desirable to use other substrates such as guar and guar derivatives such as hydroxypropyl guar.

## Claims

1. A process of making a powdered polymer of a water soluble, exothermically polymerisable, ethylenically unsaturated, monomeric material comprising providing a foamed aqueous solution of the monomeric material, initiating polymerisation of the monomeric material by blending initiator with the solution, exothermically polymerising the monomeric material to form a foamed gel, and comminuting the gel, characterised in that the polymerisation temperature is below 60°C for at least the first 10 minutes of the polymerisation and then is allowed to rise exothermically to a higher temperature.

2. A process according to claim 1 in which the temperatue is allowed to rise exothermically to a temperature at which steam is evolved.

3. A process according to claim 1 or claim 2 in which a chain transfer agent is included in the aqueous solution.

4. A process according to any of claims 1 to 3 in which the monomers are selected from ethylenically unsaturated carboxylic acids, ethylenically unsaturated sulphonic acids, and water soluble non-ionic monomers.

5. A process according to any preceding claim in which the monomers comprise 3 to 30% ethylenically unsaturated sulphonic acid monomer and 97 to 70% by weight other monomers comprising ethylenically unsaturated carboxylic monomer.

6. A process according to any preceding claim in which the monomers comprise 3 to 30% by weight ethylenically unsaturated sulphonic monomer together with ethylenically unsaturated carboxylic monomer and acrylamide in an amount of 1 to 3 times the weight of ethylenically unsaturated carboxylic monomer.

7. A process according to any of claims 4 to 6 in which the ethylenically unsaturated carboxylic monomer is acrylic acid and the sulphonic monomer is AMPS or allyl sulphonate.

8. A process according to any preceding claim in which a polyhydroxy polymer is included in the aqueous solution and the final product is a graft polymer.

9. A process according to claim 8 in which the aqueous solution contains 3 to 70% water soluble polyhydroxy compound, 3 to 10% ethylenically unsaturated sulphonic monomer and 25 to 95% of a blend of 1 to 3 parts acrylamide with 1 part acrylic acid.

10. A process according to claim 8 or claim 9 in which the polyhydroxy compound is water soluble starch, dextrin, dextran or carboxymethyl cellulose and the sulphonic monomer is AMPS.

11. A powder, water soluble, graft copolymer formed from 3 to 70% water soluble polyhydroxy polymer, 3 to 10% ethylenically unsaturated sulphonate monomer and 25 to 95% of a blend of acrylamide with sodium acrylate or other water soluble salt of acrylic acid and in which, in the blend, the amount of acrylamide is 50 to 75% and the amount of sodium acrylate is 25 to 50% by weight.

12. A graft copolymer according to claim 11 formed from 30 to 60% by weight of a polyhydroxy polymer selected from water soluble starch, dextrin, dextran and carboxymethyl cellulose, 3 to 10% AMPS with the balance being a blend of 1 to 3 parts acrylamide with 1 part acrylic acid.

13. A downhole fluid containing, as fluid loss additive or other viscosifer, a polymer according to claim 11 or claim 12.